# EUROPÄISCHE PATENTANMELDUNG

(11) **EP 3 954 786 A1**
(43) Veröffentlichungstag der Anmeldung: **16.02.2022**
(21) Anmeldenummer: 20190705.2
(22) Anmeldetag: 12.08.2020
(51) Int. Cl.: C21B 5/02, C21B 13/00, C21B 13/02, C21C 5/04, C21C 5/28, C21C 5/52, C21C 5/35, C21C 5/54, C21C 5/56, C21C 7/072, C21C 7/10

(54) **VERFAHREN ZUR HERSTELLUNG VON ROHSTAHL UND AGGREGAT ZU DESSEN HERSTELLUNG**

(71) Anmelder: ThyssenKrupp Steel Europe AG, 47166 Duisburg (DE)
(72) Erfinder: WEINBERG, Matthias Dr., 47809 Krefeld (DE); AHRENHOLD, Franck Dr., 47051 Duisburg (DE)
(74) Vertreter: ThyssenKrupp Steel Europe AG

(57) **Zusammenfassung**

Die Erfindung betrifft ein Verfahren zur Herstellung von stickstoffarmen Rohstahl. Das Verfahren umfasst dabei die die folgenden Verfahrensschritte:
- Aufschmelzen von direktreduziertem Eisen und/oder Schrott in einem Schmelzofen mit Lichtbogen-Widerstandserwärmung zu einer metallischen Schmelze und einer Schlacke
- Entnehmen der metallischen Schmelze aus dem Schmelzofen und Chargieren in einen Konverter
- Frischen der metallischen Schmelze in dem Konverter zu flüssigem Rohstahl und Abstechen des flüssigen Rohstahls mit einem Stickstoffgehalt [N] von maximal 50 ppm, insbesondere von maximal 30 ppm

## Beschreibung

Bei der Stahlerzeugung werden heutzutage im Wesentlichen zwei unterschiedliche Routen eingesetzt. Zum einen die Hochofen-Konverter-Route und zum anderen die Elektrostahl-Route. Bei der Hochofen-Konverter-Route wird das Eisenerz im Hochofen unter Zugabe von Koks reduziert und eingeschmolzen. Anschließend wird die entstandene metallische Schmelze in einem Sauerstoffblaskonverter mit Sauerstoff oxidiert ("gefrischt"). Dabei oxidieren sauerstoffaffine Begleitelemente der metallischen Schmelze (wie z.B. Kohlenstoff, Silizium, Mangan, Phosphor) und werden in Form von Gas oder Schlacke ausgetragen. Bei der Elektrostahl-Route wird als Ausgangsstoff direktreduziertes Eisen ("Eisenschwamm"), teilweise in brikettierter Form, und/oder Schrott eingesetzt. Dieses Ausgangsmaterial wird in einem Lichtbogen-Schmelzofen ("electric arc furnace") aufgeschmolzen und kann durch Einblasen von Sauerstoff ebenfalls von sauerstoffaffinen Bestandteilen befreit werden.

Die Hochofen-Konverter-Route hat den Nachteil, dass bei der Reduktion mit Koks im Hochofen sehr große CO₂-Mengen freiwerden. Dahingegen hat die Elektrostahl-Route den Nachteil, dass in der Regel die Entfernung sauerstoffaffiner Elemente und durch Schrott eingetragener Verunreinigungen weniger effizient ist. Bei der Elektrostahl-Route müssen die Begleitelemente und Verunreinigungen durch aufwendige nachgeschaltete, sekundärmetallurgische Verfahren weiter reduziert werden. Aus diesem Grund wird die Elektrostahl-Route im Wesentlichen für Baustähle und Langprodukte verwendet, für die höhere Gehalte an Begleitelementen zugelassen sind.

Rohstahl mit geringen Gehalten an Begleitelementen, der als Ausgangsmaterial beispielsweise für ULC-Stahlgüten, wie IF-Stähle und nicht-kornorientiertem Elektroband dient, wird fast ausschließlich über die Hochofen-Konverter-Route hergestellt. Daher sind in den Stahlwerken weltweit auch die entsprechenden Aggregate vorhanden, um einen geeigneten Rohstahl in der erforderlichen Menge zu erzeugen und weiterzuverarbeiten

Unter einer ULC-Stahlgüte (Ultra Low Carbon) wird eine Stahlgüte mit einem Kohlenstoffgehalt C von maximal 150ppm (0,015 Gew.-%), insbesondere maximal 100ppm, bevorzugt maximal 50ppm, insbesondere maximal 30 ppm, verstanden.

Unter IF-Stahl wird eine ULC-Stahlgüte verstanden, die zudem einen Stickstoffgehalt N von maximal 50ppm (0,005 Gew.-%), bevorzugt maximal 30 ppm aufweist.

Unter nicht-kornorientiertem Elektroband-Güte wird ein IF-Stahl verstanden, der zudem einen Siliziumgehalt Si von 1,0-5,0%, bevorzugt 2,0-4,0% aufweist.

Die genannten Elementgehalte der Stahlgüten beziehen sich auf den erstarrten Stahl nach dem Vergießen, beispielsweise in einer Stranggussanlage.

Besonderer Schwerpunkt liegt dabei auf dem Stickstoffgehalt des erzeugten Rohstahls, da sich dieser nur schwer mit sekundärmetallurgischen Verfahren reduzieren lässt, insbesondere, wenn gleichzeitig der Sauerstoffgehalt einen gewissen Gehalt überschreitet, wie später im Detail erläutert ist.

Aufgabe der vorliegenden Erfindung ist es daher, ein Verfahren zur Herstellung von stickstoffarmen Rohstahl bereitzustellen, bei dem der CO₂-Ausstoss reduziert ist und möglichst viele bereits vorhandene Aggregate weiterverwendet werden können, um den Invest bei der Technologieumstellung gering zu halten.

Dabei umfasst das Verfahren zur Herstellung von stickstoffarmen Rohstahl mindestens die folgenden Verfahrensschritte:
- Aufschmelzen von direktreduziertem Eisen und/oder Schrott in einem Schmelzofen mit Lichtbogen-Widerstandserwärmung zu einer metallischen Schmelze und einer Schlacke
- Entnehmen der metallischen Schmelze aus dem Schmelzofen und Chargieren in einen Konverter
- Frischen der metallischen Schmelze in dem Konverter zu flüssigem Rohstahl und Abstechen des flüssigen Rohstahls mit einem Stickstoffgehalt N von maximal 70ppm, insbesondere von maximal 50 ppm

Optional wird nach dem Entnehmen der metallischen Schmelze aus dem Schmelzofen und vor dem Chargieren in einen Konverter eine Zwischenbehandlung, insbesondere eine Entschwefelung der metallischen Schmelze durchgeführt.

Alternativ oder zusätzlich kann die Zwischenbehandlung ein Abschlacken und/oder ein Entsilizieren umfassen.

Dieses Verfahren hat viele technische und wirtschaftliche Vorteile, die im Folgenden detailliert erläutert sind.

Die Erfindung betrifft weiterhin ein Aggregat zur Durchführung eines solchen Verfahrens. Dabei umfasst das Aggregat einen Schmelzofen mit Lichtbogen-Widerstandserwärmung zur Erzeugung einer metallischen Schmelze und einem stromabwärts des Schmelzofens angeordneten Konverter zum Frischen der metallischen Schmelze zu flüssigem Rohstahl. Bei einer speziellen Ausführungsvariante ist eine Entschwefelungsanlage unmittelbar stromabwärts des Schmelzofens angeordnet und der Konverter unmittelbar stromabwärts der Entschwefelungsanlage.

Unter "unmittelbar stromabwärts" und "unmittelbar stromaufwärts" wird im Sinne dieser Anmeldung verstanden, dass die jeweiligen Anlagen direkt aufeinander folgen. Zwischen solch direkt aufeinander folgenden Anlagen findet lediglich ein Transport des Materials und/oder eine Zwischenlagerung des Materials statt. Das Material wird insbesondere zwischen zwei solchen Anlagen nicht gereinigt, mit anderen Stoffen vermischt oder anderweitig weiterveredelt.

Bei der Erläuterung von Elementgehalten werden die folgenden Konventionen verwendet: Ein Elementsymbol in eckigen Klammern (z.B. "[N]") bezeichnet, den Gehalt dieses Elements (hier Stickstoff) in Gewichtsprozent in der Metallschmelze. Ein Elementsymbol in runden Klammern (z.B. "(P)") bezeichnet, den Gehalt dieses Elements (hier Phosphor) in Gewichtsprozent in der Schlacke. Ein Elementsymbol ohne Klammern (z.B. "C") bezeichnet, den Gehalt dieses Elementes (hier Kohlenstoff) in Gewichtsprozent im vergossenen Stahl.

In dieser Anmeldung sind Prozentangaben (bzw. ppm-Angaben) grundsätzlich als Gewichtsprozent Gew.-% zu verstehen, soweit nicht explizit anders beschrieben.

Bei den Elektrowärmeanlagen zum Aufschmelzen von Metall oder Erhitzen von flüssigem Metall unterscheidet man die folgenden Typen:
1. Schmelzöfen mit direkter Lichtbogeneinwirkung (engl. Electric Arc Furnace EAF), die Lichtbögen zwischen der Elektrode und dem Metall bilden. Dies umfasst den Wechselstrom-Lichtbogen-Schmelzofen (EAFac), den Gleichstrom-Lichtbogen-Schmelzofen (EAFdc) und den Pfannenofen (engl. Ladle Furnace LF).
2. Schmelzöfen mit Lichtbogen-Widerstandserwärmung, die Lichtbögen zwischen der Elektrode und der Charge oder der Schlacke bilden oder welche die Charge oder die Schlacke mittels Joule-Effekt erwärmen. Dies umfasst einerseits Lichtbogen-Reduktionsöfen (engl. Submerged Electric Arc Furnace SAF), bei denen die Elektrode in die Charge oder Schlacke eingetaucht ist, beispielsweise Wechselstrom-Lichtbogen-Reduktionsöfen (SAFac) und Gleichstrom-Lichtbogen-Reduktionsöfen (SAFdc). Andererseits umfasst dies auch Öfen, bei denen die Elektrode knapp oberhalb der Schlacke enden kann. Bei diesem Ofentyp ist die Schlacke zumindest im Bereich der Elektrode nicht durch die Charge abgeschirmt. Die Schlacke ist also nach oben hin offen und der sich zur Schlacke ausbildende bürstenförmige Lichtbogen (engl. brush arc) von oben einsehbar. Dieser Ofentyp wird als Open Slag Bath Furnace (OBSF) bezeichnet.

Schmelzöfen mit direkter Lichtbogeneinwirkung werden mit einer oxidierenden Atmosphäre betrieben, um die unerwünschte Begleitelemente zu verbrennen. Dagegen werde Schmelzöfen mit Lichtbogen-Widerstandserwärmung mit einer reduzierenden Atmosphäre betrieben.

In einem ersten Schritt des Verfahrens wird direktreduziertes Eisen und/oder Schrott in einem Schmelzofen mit Lichtbogen-Widerstandserwärmung zu einer metallischen Schmelze aufgeschmolzen und gleichzeitig eine Schlacke gebildet.

Erfindungsgemäß schließt sich an die Behandlung im Schmelzofen mit Lichtbogen-Widerstandserwärmung ein Chargieren in einen Konverter und ein Frischen der metallischen Schmelze in dem Konverter zu flüssigem Rohstahl an. Insbesondere wird beim Frischen mit einer ausfahrbaren Lanze technisch reiner Sauerstoff von oben auf die metallische Schmelze geblasen wird, wobei insbesondere 30 bis 80 Nm³ (Normkubikmeter) technisch reiner Sauerstoff pro Tonne metallische Schmelze, bevorzugt 40 bis 60 Nm³ technisch reiner Sauerstoff pro Tonne metallische Schmelze verwendet wird. Der Sauerstoff wird für einen Zeitraum von 10 bis 40 Minuten auf die metallische Schmelze geblasen. Bevorzugt beträgt der Zeitraum mindestens 12, besonders bevorzugt mindestens 15 Minuten. Unabhängig davon beträgt der Zeitraum bevorzugt maximal 35, besonders bevorzugt maximal 30 Minuten.

Ein Konverter wird bekanntermaßen zur oxidierenden Entfernung von Begleitelementen verwendet. Dies betrifft insbesondere den Kohlenstoff, so dass im Konverter die metallische Schmelze in Rohstahl mit einem Kohlenstoffgehalt [C] von maximal 600ppm, bevorzugt maximal 500 ppm umgewandelt wird. Insbesondere beträgt der Kohlenstoffgehalt [C] des Rohstahls mindestens 200ppm, bevorzugt mindestens 300ppm. Dabei ist der Konverter insbesondere als ein Sauerstoffblasskonverter ausgebildet.

In einer anschließenden sekundärmetallurgischen Behandlung des hergestellten Rohstahls, die später genauer erläutert wird, wird der Kohlestoffgehalt des Rohstahls [C] weiter abgesenkt auf den Kohlenstoffgehalt C der ULC-Stahlgüte von maximal 150ppm, insbesondere maximal 100ppm, bevorzugt maximal 50 ppm, insbesondere maximal 30 ppm.

Sauerstoffblaskonverter, in der Fachsprache auch Linz-Donauwitz-Konverter (LD-Konverter) genannt, umfassen ein kippbares Konvertergefäß, das mit einer feuerfesten Auskleidung ausgekleidet ist.

Die dem Schmelzofen entnommene metallische Schmelze wird in den Konverter chargiert. Optional wird der Konverter zusätzlich mit als Kühlmittel dienendem Schrott beschickt. Optional kann auch Roheisen aus einem Hochofenprozess beigemischt werden. Dies wird beispielsweise während der Umrüstung eines bestehenden Aggregats der Fall sein.

Im Konverter wird die metallische Schmelze gefrischt. Hierbei wird durch eine ausfahrbare wassergekühlte Lanze Sauerstoff auf die metallische Schmelze geblasen. Die daraufhin heftig einsetzen Oxidation des Eisens und der Begleitelemente bewirkt, dass nach einer Blaszeit von 10 bis 40 Minuten die Begleitelemente auf das gewünschte Maß reduziert sind und der gegebenenfalls eingesetzte Schrott schmolzen ist. Die verbrannten Eisenbegleiter entweichen als Gase oder werden durch jetzt zugesetzten Kalk in der flüssigen Schlacke gebunden.

Neben der Reduktion der unerwünschten Begleitelemente sorgt deren exotherme Reaktion mit dem eingeblasenen Sauerstoff für eine Durchwirbelung der Schmelze, durch die das Ergebnis des Frischprozesses verbessert und die Behandlungsdauer verkürzt wird. Um diese Durchmischung weiter zu intensivieren, kann ein Inertgas, typischerweise Argon und Stickstoff, über in den Konverterboden eingesetzte Düsen eingeblasen werden. Wie nachfolgend erläutert wird erfindungsgemäß beim Frischen auch der Stickstoffgehalt reduziert. Daher wird als Inertgas für die Durchmischung bevorzugt Argon verwendet. Alternativ wird der Stickstoffanteil im Inertgas während des Frischens reduziert, so dass zum Ende des Frischens kein oder nur ein geringer Stickstoffanteil im Inertgas vorliegt.

Neben anderen Prozessen, die später noch erläutert werden, kommt es unter Oxidation von Kohlenstoff als Begleitelement zur Bildung von CO-Blasen innerhalb der metallischen Schmelze. Aufgrund des niedrigen Stickstoff-Partialdrucks in den CO-Blasen diffundiert der in der metallischen Schmelze gelöste Stickstoff [N] in die CO-Blasen und verlässt mit dem CO die Schmelze. Dieser Entstickungsvorgang läuft solange ab, wie sich CO-Blasen bilden, das heißt solange ausreichend Kohlenstoff in der metallischen Schmelze vorhanden ist, der zu CO oxidiert werden kann. Für den Entstickungsvorgang ist es daher vorteilhaft, wenn die metallische Schmelze unmittelbar vor dem Frischen ein Verhältnis von Kohlenstoffgehalt zu Stickstoffgehalt [C]/[N] aufweist, das mindestens 20, bevorzugt mindestens 100, insbesondere mindestens 200, besonders bevorzugt mindestens 500, insbesondere mindestens 1000 beträgt.

Bei einer bevorzugten Ausführungsvariante beträgt der Kohlenstoffgehalt [C] der metallischen Schmelze unmittelbar vor dem Frischen mindestens 1,0%, bevorzugt mindestens 1,5%, besonders bevorzugt mindestens 2,0%. Bei einer weiteren bevorzugten Ausführungsvariante beträgt der Kohlenstoffgehalt [C] der metallischen Schmelze unmittelbar vor dem Frischen maximal 5,0%, bevorzugt maximal 4,5%, besonders bevorzugt maximal 4,0%.

Mit diesen Kohlenstoffgehalten [C] und dem beschriebenen hohen Verhältnis von Kohlenstoffgehalt zu Stickstoffgehalt [C]/[N] lässt sich selbst bei Stickgehalten [N] der metallischen Schmelzen unmittelbar vor dem Frischen von bis zu 450 ppm eine wirkungsvolle Entstickung erreichen, so dass der abgestochene flüssige Rohstahl nach dem Frischen einen Stickstoffgehalt [N] von maximal 50ppm, bevorzugt maximal 40ppm, insbesondere maximal 30ppm, besonders bevorzugt maximal 25ppm, insbesondere maximal 20ppm aufweist.

Der Konverter ist insbesondere weitgehend geschlossen ausgebildet, um einen Wiedereintrag von Stickstoff aus der Umgebungsatmosphäre zu reduzieren, insbesondere komplett zu verhindern. Dies wird zusätzlich durch die Bildung der CO unterstützt. Die Menge von CO ist derart groß, dass die Umgebungsluft an der Oberfläche der Schmelze verdrängt wird, so dass die Aufnahme von Stickstoff aus der Umgebungsluft unterdrückt ist.

Da es bei der sekundärmetallurgischen Behandlung und/oder beim Vergießen des Rohstahls zu einer gewissen Aufnahme von Stickstoff kommen kann, ist es vorteilhaft, wenn der Stickstoffgehalt beim Frischen in Konverter stärker abgesenkt wird als es eigentlich für die zu erzeugende Stahlgüte erforderlich. Beispielsweise wird bei der Herstellung einer IF-Stahlgüte mit einem Stickstoffgehalt N von maximal 30ppm der Stickstoffgehalt [N] des flüssigen Rohstahls nach dem Frischen auf maximal 25ppm, bevorzugt auf maximal 20ppm abgesenkt.

Das beschriebene Verfahren ermöglicht es einerseits, den Stickstoffgehalt erfolgreich abzusenken, wenn der Stickstoffgehalt der metallischen Schmelze über 50ppm liegt und andererseits gelingt es bei Stickstoffgehalten von unter 50ppm den Stickstoffgehalt niedrig zu halten oder sogar weiter abzusenken. Im Ergebnis beträgt der Stickstoffgehalt [N] des flüssigen Rohstahls nach dem Frischen auf jeden Fall 50 ppm oder weniger.

In einer bevorzugten Ausführungsvariante wird der Kohlenstoffgehalt [C] der metallischen Schmelze im Schmelzofen und/oder im Konverter erhöht. Der Kohlenstoffgehalt wird also vor dem Frischen im Konverter erhöht. Dies dient dazu sicherzustellen, dass sich ausreichend CO-Blasen während des Frischens bilden, um einen effizienten Entstickungsvorgang zu ermöglichen. Insbesondere wird der Kohlenstoffgehalt [C] der metallischen Schmelze soweit erhöht, dass unmittelbar vor dem Frischen ein Verhältnis von Kohlenstoffgehalt zu Stickstoffgehalt [C]/[N] vorliegt, das mindestens 20, bevorzugt mindestens 100, insbesondere mindestens 200, besonders bevorzugt mindestens 500, insbesondere mindestens 1000 beträgt.

Der Kohlenstoffgehalt [C] der metallischen Schmelze wird insbesondere durch das Einblasen von Koks oder Prozessgasen/Kohlestaub im Schmelzofen oder Konverter erreicht.

In einer bevorzugten Ausführungsvariante ist der Eisenanteil (Fe) der Schlacke im Schmelzofen kleiner als 30 Gew.-%, bevorzugt kleiner 20 Gew.-%. Hierdurch wird das Verfahren besonders effizient, da der Verlust an Eisen durch die Schlacke besonders niedrig ist. Solch niedrige Eisenanteile lassen sich insbesondere durch die Verwendung des Schmelzofens mit Lichtbogen-Widerstandserwärmung erreichen. Im Schmelzofen mit direkter Lichtbogeneinwirkung, der oxidierend betrieben wird, ergeben aufgrund der oxidierenden Atmosphäre höhere Ausbringungsverluste in Form von FeO in der Schlacke, wodurch ein Einsatz dieser Schmelzofenart ineffizienter ist. Die Kombination eines Schmelzofens mit Lichtbogen-Widerstandserwärmung mit einem nachgeschalteten Konverter ist daher stofflich effizienter als ein Schmelzofen mit direkter Lichtbogeneinwirkung, der Schmelzen und Oxidation in einem Schritt kombiniert. Im Übrigen ist der Schmelzofen mit Lichtbogen-Widerstandserwärmung auch energetisch effizienter, da es beim Schmelzofen mit direkter Lichtbogeneinwirkung zu hohen Energieverlusten bei einem nicht gut durch Schaumschlacke abgeschirmten Lichtbogen kommt.

Bei einer weiteren bevorzugten Ausführungsvariante ist der Schmelzofen mit Lichtbogen-Widerstandserwärmung geschlossen ausgeführt. Hierdurch wird zum einen ein Wärmeverlust verhindert und zudem das Eintreten von Sauerstoff verringert, so dass eine reduzierende Ofenatmosphäre erhalten bleibt und damit die Oxidationsverluste gering sind.

Eine andere Möglichkeit den Stickstoffgehalt zu reduzieren, wäre eine Vakuumbehandlung (z.B. Ruhrstahl-Heraeus-Verfahren, RH-Verfahren) in der Sekundärmetallurgie. Dies ist jedoch bei der Herstellung von ULC-Stahlgüten nur begrenzt möglich. Der extrem niedrige Kohlenstoffgehalt von 150ppm, insbesondere 50ppm, bevorzugt 30ppm bei ULC-Stahlgüten wird durch das Frischen im Konverter und eine nachgeschaltete sekundärmetallurgische Behandlung (hier eine Vakuumbehandlung) erreicht. Dies führt allerdings gleichzeitig zu einer Anreicherung von gelöstem Sauerstoff im Rohstahl beim Frischen. Der Sauerstoffgehalt [O] im Rohstahl nach dem Konverter beträgt zwischen 300 und 2300ppm. Insbesondere beträgt der Sauerstoffgehalt mindestens 400 ppm, bevorzugt mindestens 600 ppm, besonders bevorzugt mindestens 800ppm. Insbesondere beträgt der Sauerstoffgehalt maximal 2100 ppm, bevorzugt maximal 2000 ppm, besonders bevorzugt maximal 1800 ppm. Dieser Sauerstoffgehalt führt jedoch dazu, dass eine Entstickung auf die genannten Stickstoffgehalte [N] von 50ppm oder weniger mittels Vakuumbehandlung nicht effizient abläuft. Forschungen haben gezeigt, dass eine solche Vakuum-Entstickung nur bei niedrigsten Sauerstoffgehalten [O] von 100ppm oder weniger in einer wirtschaftlichen Zeit durchführbar ist.

Eine Vakuum-Entstickung in der Sekundärmetallurgie würde zudem weitere Probleme aufwerfen. Zum einen wäre ein zusätzlicher Invest für die entsprechenden Aggregate erforderlich. Zum anderen führt jede Änderung der sekundärmetallurgischen Verfahren bei der Herstellung einer Stahlgüte dazu, dass der Herstellungsprozess für den Endkunden neu spezifiziert werden muss. Das erfindungsgemäße Verfahren zur Herstellung eines Rohstahls hat demgegenüber den Vorteil, dass die Weiterveredelung in der Sekundärmetallurgie unverändert bleibt und folglich keine Neuzertifizierung erforderlich ist.

Mit dem erfindungsgemäßen Verfahren kann also ein stickstoffarmer Rohstahl erzeugt werden, der gleichzeitig besonders kohlenstoffarm ist und daher als Ausgangsprodukt für die Produktion von ULC-Stahlgüten verwendet werden kann. Insbesondere beträgt der Kohlenstoffgehalt des Rohstahls weniger als 600ppm, bevorzugt weniger als 500ppm, und der Stickstoffgehalt weniger als 50 ppm, bevorzugt weniger als 30ppm.

Bei der klassischen Elektrostahl-Route mit einem Schmelzofen mit direkter Lichtbogeneinwirkung, wird zwar ebenfalls Sauerstoff eingeblasen, um unter anderem Kohlenstoff zu entfernen, aufgrund der Bauform des Ofens ist jedoch der Sauerstoffeintrag begrenzt, so dass der Kohlenstoffgehalt nicht so weit abgesenkt werden kann. Aufgrund des geringeren Sauerstoffeintrages beim Frischen ergibt sich auch keine effiziente Entstickung über die beschriebenen CO-Blasen bei der klassischen Elektrostahl-Route. Zudem werden die derartigen Schmelzöfen mit einer oxidierenden Atmosphäre (d.h. unter Umgebungsluft) betrieben, so dass es zu Stickstoffeintrag aus der Umgebungsatmosphäre kommt. Zudem haben derartige Öfen eine flache Bauform im Gegensatz zu einem Konverter, was den Stickstoffeintrag weiter begünstigt.

Weiterer Vorteil des erfindungsgemäßen Verfahren ist der geringe Siliziumgehalt des flüssigen Rohstahls nach dem Abstich im Konverter. Beim Frischen im Konverter wird Silizium sehr effektiv oxidiert und anschließend durch die Schlacke ausgetragen, so dass der Si-Gehalt [Si] vor dem Konverter irrelevant ist. Der Si-Gehalt des abgestochenen flüssigen Rohstahls beträgt maximal 300ppm, bevorzugt maximal 200ppm.

Bei typischen Ausgangsstoffen kann der Si-Gehalt [Si] der metallischen Schmelze beim Chargieren in den Konverter bis zu 1,5% betragen.

Ein weiterer Vorteil des erfindungsgemäßen Verfahrens mit Konverter gegenüber der klassischen Elektrostahl-Route mit einem Schmelzofen mit direkter Lichtbogeneinwirkung besteht im Schlackeanteil. Während im Konverter ein Schlackeanteil von 100-120 kg/t realisiert werden kann, liegt der Schlackeanteil bei einem Schmelzofen mit direkter Lichtbogeneinwirkung lediglich bei etwa 50 kg/t. Zudem führt der größere Normvolumenstrom beim Frischen im Konverter dazu, dass sich eine starke Durchmischung von Schlacke und Schmelze ergibt. Es entsteht eine Emulsion von Schmelzentröpfchen in der Schlacke. Dies führt zu einer größeren reaktiven Oberfläche zwischen Schmelze und Schlacke, was sich positiv auf die Entphosphorung auswirkt. Zudem ist die Ablagerung von Phosphor als P₂O₅ in der Schlacke eine Gleichgewichtsreaktion. Daher ist es vorteilhaft einen möglichst hohen Schlackenanteil zu realisieren, wenn sich möglichst viel Phosphor aus der Schmelze in der Schlacke ablagern soll. Bei der Verwendung eines Konverters ergibt sich eine Phosphorverteilung von (P)/[P] = 60 -80 Gew.-%/Gew.-% wohingegen bei einem Schmelzofen mit direkter Lichtbogeneinwirkung das gleiche Verhältnis lediglich 30 - 40 Gew.-%/Gew.-% beträgt. Zudem ist die Zusammensetzung der Schlacke bei einem Schmelzofen mit direkter Lichtbogeneinwirkung auf das Aufschäumen für das Schaumschlackeverfahren optimiert und nicht auf die Entphosphorung. Der Phosphor-Gehalt [P] der metallischen Schmelze unmittelbar vor dem Frischen beträgt zwischen 100 ppm und 1500 ppm. Der Phopshor-Gehalt [P] des abgestochenen flüssigen Rohstahls beträgt dagegen maximal 400ppm.

Wie bereits erläutert kann optional nach dem Entnehmen der metallischen Schmelze aus dem Schmelzofen und vor dem Chargieren in einen Konverter eine Entschwefelung durchgeführt werden. Hierzu wird der metallischen Schmelze insbesondere Kalziumoxid und/oder Kalziumcarbid und/oder Magnesium zugesetzt. Dabei reagiert im Wesentlichen das enthaltenen Eisensulfid FeS zu Kalziumsulfit CaS bzw. Magnesiumsulfit MgS. Das gebildete CaS oder MgS wird dann in einer basischen Schlacke gebunden.

Der Schwefel-Gehalt [S] der metallischen Schmelze unmittelbar vor dem Frischen (und damit nach der optionalen Entschwefelung) beträgt bis zu 1500 ppm. Der Schwefel-Gehalt [S] des abgestochenen flüssigen Rohstahls beträgt ebenfalls bis zu 1500ppm.

Optional kann die metallische Schmelze und der abgestochene flüssige Rohstahl Mangan enthalten. In einem solchen Fall beträgt der Mangan-Gehalt [Mn] der metallischen Schmelze unmittelbar vor dem Frischen beträgt bis zu 0,5%. Der Mangan-Gehalt [Mn] des abgestochenen flüssigen Rohstahls beträgt dagegen maximal 0,4%.

Optional kann die metallische Schmelze und/oder der abgestochene flüssige Rohstahl weitere unvermeidbare Verunreinigungen enthalten, die in Summe bis zu 2,0% ausmachen können.

Der Eisenanteil [Fe] der metallischen Schmelze unmittelbar vor dem Frischen beträgt mindestens 90,0%. Der Eisenanteil [Fe] des abgestochenen flüssigen Rohstahls beträgt mindestens 97,0%. Bei einer bevorzugten Variante weist die metallische Schmelze unmittelbar vor dem Frischen zumindest einen, bevorzugt mehrere, insbesondere alle, Elementgehalte an Begleitelementen aus der folgenden Zusammenstellung auf:
Kohlenstoff [C]: mindestens 1,0%, insbesondere mindestens 1,5%, maximal 5,0%, insbesondere maximal 4,5%
Stickstoff [N]: maximal 450ppm, insbesondere mehr als 50ppm
Optional Sauerstoff [O]: 0-50ppm
Optional Phosphor [P]: 100- 1500ppm
Optional Schwefel [S]: 0-1500ppm
Optional Silizium [Si]: 0-1,5%
Optional Mangan [Mn]: 0-0,5%

Insbesondere enthält die metallische Schmelze unmittelbar vor dem Frischen:
Kohlenstoff [C]: mindestens 1,0 %, insbesondere mindestens 1,5 %, maximal 5,0 %, insbesondere maximal 4,5%
Stickstoff [N]: maximal 450ppm, insbesondere mehr als 50ppm
Optional Sauerstoff [O]: 0-50ppm
Optional Phosphor [P]: 100- 1500ppm
Optional Schwefel [S]: 0-1500ppm
Optional Silizium [Si]: 0-1,5%
Optional Mangan [Mn]: 0-0,5%
Rest Eisen und unvermeidbare Verunreinigungen, wobei die Verunreinigungen maximal in Summe 2,0 % ausmachen

Bei einer bevorzugten Variante weist der abgestochene flüssige Rohstahl zumindest einen, bevorzugt mehrere, insbesondere alle, Elementgehalte an Begleitelementen aus der folgenden Zusammenstellung auf:
Kohlenstoff [C]: maximal 600 ppm, insbesondere maximal 500 ppm
Stickstoff [N]: maximal 50 ppm, insbesondere maximal 30 ppm
Sauerstoff [O]: mindestens 300 ppm, maximal 2300 ppm
Optional Phosphor [P]: 0-400ppm
Optional Schwefel [S]: 0-1500ppm
Optional Silizium [Si]: 0-300ppm
Optional Mangan [Mn]:0-0,4%

Insbesondere enthält der abgestochene flüssige Rohstahl:
Kohlenstoff [C]: maximal 600 ppm, insbesondere maximal 500 ppm
Stickstoff [N]: maximal 50 ppm, insbesondere maximal 30 ppm
Sauerstoff [O]: mindestens 300 ppm, maximal 2300 ppm
Optional Phosphor [P]: 0-400ppm
Optional Schwefel [S]: 0-1500ppm
Optional Silizium [Si]: 0-300ppm
Optional Mangan [Mn]:0-0,4%
Rest Eisen und unvermeidbare Verunreinigungen, wobei die Verunreinigungen maximal in Summe 2,0 Gew.-% ausmachen

Das erfindungsgemäße Verfahren mit Konverter hat den weiteren Vorteil, dass die Schmelzofenschlacke sich frei in Ihrer Zusammensetzung einstellen lässt, während die Schlacke bei einem Schmelzofen mit direkter Lichtbogeneinwirkung in der Regel zum Aufschäumen optimiert wird und daher nicht beliebig variiert werden kann.

Die Zusammensetzung kann also zum Beispiel ähnlich zur Zusammensetzung von Hüttensand eingestellt werden. Daher kann die Schmelzofenschlacke analog zu Hüttensand beispielsweise in der Zementindustrie weiterverwendet werden.

Bei einer bevorzugten Ausführungsvariante umfasst der Schmelzofen mit Lichtbogen-Widerstandserwärmung mindestens eine Elektrode, die als Söderberg-Elektrode ausgeführt ist.

Eine Söderberg-Elektrode umfasst einen Blechmantel, auf dessen Innenseite Rippen (sogenannte Leitbleche) angeordnet sind. Der Blechmantel wird kontinuierlich mit Elektrodenmasse, beispielsweise in Form von Briketts oder in Form von Blöcken oder Zylindern, gefüllt. Da sich die Elektrode im Betrieb am der Schmelze zugewandten Ende abgenutzt, wird die Elektrode im Betrieb kontinuierlich abgesenkt und von oben neu mit Elektrodenmaterial befüllt. Zudem wird der Blechmantel kontinuierlich durch Anschweißen verlängert.

Bei einer bevorzugten Ausführungsvariante umfasst der Schmelzofen mit Lichtbogen-Widerstandserwärmung genau drei Elektroden und wird mit dreiphasigem Wechselstrom betrieben

In einer bevorzugten Ausführungsvariante umfasst das Verfahren ein vorgeschaltetes Direktreduktionsverfahren zur Erzeugung des direktreduzierten Eisens. Das Aggregat umfasst dann eine Direktreduktionsanlage stromaufwärts, bevorzugt unmittelbar stromaufwärts, des Schmelzofens mit Lichtbogen-Widerstandserwärmung. Bei diesem Direktreduktionsverfahren findet eine Feststoffreaktion statt, bei der Sauerstoff aus dem Eisenerz entfernt wird. Hierzu werden klassisch Kohle oder Erdgas als Reduktionsmittel verwendet. In letzter Zeit wird häufiger auch Wasserstoff als Reduktionsmittel vorgeschlagen. Die Reaktion findet unterhalb des Schmelzpunktes des Eisenerzes statt, sodass die äußere Form der Erze unverändert bleibt. Da es der Entfernung von Sauerstoff zu einer Gewichtsreduktion von etwa 27-30 % kommt, ergibt sich eine wabenförmige Mikrostruktur des Reaktionsproduktes (festes poröses Eisen mit vielen luftgefüllten Zwischenräumen). Daher wird das direktreduzierte Eisen häufig auch als Eisenschwamm bezeichnet.

In einer bevorzugten Ausführungsvariante umfasst die Direktreduktionsanlage einen Schachtofen mit einer Reduktionszone, die das Eisenerz entgegen dem Reduktionsgas durchläuft.

Bei einer speziellen Variante des Verfahrens ist die Reduktionszone oberhalb einer Kühlzone im Schachtofen angeordnet. Das Eisenerz durchläuft dann den Schachtofen in vertikaler Richtung von oben nach unten. Derartige Schachtöfen ermöglichen eine gute Durchströmung des Eisenerzes mit Kühlgas und Reduktionsgas aufgrund des zugrundeliegenden Kamineffektes. Insbesondere durchströmt das Reduktionsgas die Reduktionszone entgegen einer Bewegungsrichtung des Eisenerzes. Entsprechend durchströmt des Kühlgas die Kühlzone ebenfalls entgegen einer Bewegungsrichtung des erzeugten Eisenschwamms. Sowohl in der Kühlzone als auch in der Reduktionszone wird demnach das Gegenstromverfahren eingesetzt, um eine effiziente Reaktion zwischen den Gasen und den Feststoffen zu erreichen.

Als Reduktionsgas wird insbesondere CO oder H₂ oder ein Mischgas verwendet, dass CO und H₂ umfasst. Die Reduktionsreaktionen sind dabei wie folgt ("(s)" meint Festkörper, solid; geschweifte Klammern zeigen gasförmige Stoffe an):

3Fe₂O₃(s)+{CO}=2Fe₃O₄ (s)+{CO₂}

Fe₅O₄(s)+{CO}= 3FeO(s)+{CO₂}

FeO(s)+{CO}=Fe(s)+{CO₂}

3Fe₂O₅(s)+{H₂}=2Fe₃O₄(s)+{H₂O}

Fe₃O₄(s)+{H₂}=3FeO(s)+{H₂O}

FeO(s)+{H₂}=Fe(s)+{H₂O}

Das Reduktionsgas wird üblicherweise aus fossilen Kohlenwasserstoffen (z.B. Erdgas oder Koksofengas) erzeugt. Beispielhaft werden im Folgenden die Reaktion für Methan als Ausgangsstoff erläutert. Andere Kohlenwasserstoffe sind ebenfalls als Ausgangsstoff möglich.

In einer ersten Ausführungsvariante wird das Reduktionsgas in einem Gasreformer aus Methan, CO₂ und Wasserdampf erzeugt (MIDREX^{®}-Verfahren).

CH₄ + CO₂ = 2CO + 2H₂

CH₄ + H₂O =CO + 3H₂

Es ergibt sich ein Gaskreislauf, bei dem frisches Methan mit dem gereinigten Abgas des Schachtofens vor dem Gasreformer gemischt wird. Das Abgas des Schachtofens enthält CO₂ und Wasserdampf als Produkte der Reduktionsreaktion. Mithilfe einer katalytischen Reaktion im Gasreformer wird aus Methan, CO2 und Wasserdampf das Reduktionsgas umfassend H₂ und CO erzeugt. Dieses Reduktionsgas wird dem Schachtofen zugeführt, wo es gemäß den obigen Reaktionsgleichungen das Eisenerz reduziert. Als Reaktionsprodukte entsteht CO₂, Wasserdampf und Eisenschwamm. CO₂ und Wasserdampf und unverbrauchten Reduktionsgas werden mit Methan gemischt und wieder dem Gasrefomer zugeführt.

Bei einer alternativen Ausführungsvariante (HYL^{®}-Verfahren) wird das Reduktionsgas über die katalytische Reaktion

CH₄ + H₂O =CO + 3H₂

erzeugt, indem Methan mit Wasserdampf gemischt, erhitzt und über einen Katalysator geleitet wird. Bei dem Katalysator kann es sich beispielsweise um Nickel handeln, der in Eisen-Nickel-Rohren vorhanden ist, die das Gas zum Schachtofen leiten. Bei einer speziellen Ausgestaltung dieses Verfahrens dient der heiße Eisenschwamm selbst als Katalysator im unteren Teil der Reduktionszone. Gleichzeitig kommt es zu einer Ablagerung von Kohlenstoff auf dem Eisenschwamm, die den Kohlenstoffgehalt des Eisenschwamms erhöht.

Alternativ kann als Reduktionsgas auch Wasserstoff verwendet werden, der insbesondere klimaneutral mittels Elektrolyse erzeugt werden wird. Das Verfahren umfasst dann zusätzlich den folgenden Schritt:
- Erzeugen von direktreduziertem Eisen aus Eisenerz in einem Schachtofen unter Verbrauch von elektrolytisch erzeugtem Wasserstoff

Die Verwendung von elektrolytisch erzeugtem Wasserstoff verringert den CO₂-Ausstoss und den Verbrauch von fossilen Energieträgern und verbessert damit die Klimabilanz des Verfahrens.

Dieser Wasserstoff kann entweder vollständig Erdgas als Ausgangsstoff ersetzen oder teilweise den oben beschriebenen Verfahren beigemischt werden, um den Erdgasverbrauch zu reduzieren. Mit steigendem Wasserstoffanteil verschiebt sich die Reduktion immer weiter zu den angegebenen Reaktionsgleichungen mit H₂ und damit von den drei Reaktionsgleichungen mit CO weg.

Bei einer bevorzugten Weiterentwicklung des Verfahrens umfasst das Direktreduktionsverfahren einen Aufkohlungsschritt, bei dem das erzeugte direktreduzierte Eisen mit einem kohlenstoffhaltigen Gas beaufschlagt wird, so dass sich Kohlenstoff auf dem erzeugten Eisen ablagert. Als kohlenstoffhaltiges Gas kann insbesondere Erdgas oder CO2 verwendet werden. Je nach verwendeten Gas treten verschiedene chemische Reaktionsmechanismen bei dieser Aufkohlungsreaktion auf. Bevorzugt wird das kohlenstoffhaltige Gas in die Kühlzone des Schachtofens eingeleitet, um das erzeugte direktreduzierte Eisen gleichzeitig zu kühlen und aufzukohlen. Zudem kann das heiße, direktreduzierte Eisen in der Kühlzone zudem als Katalysator für die Aufkohlungsreaktion wirken. Durch den Aufkohlungsschritt erhöht sich der Kohlenstoffgehalt des direktreduzierten Eisens und damit auch der Kohlenstoffgehalt der metallischen Schmelze im stromabwärtsangeordneten Schmelzofen. Hierdurch ergeben sich zwei Vorteile: Zum einen sinkt der Schmelzpunkt des direktreduzierten Eisens, wodurch der Energieverbrauch im Schmelzofen reduziert wird. Zum anderen ist, wie bereits erläutert, ein höherer Kohlenstoffgehalt vorteilhaft für den beschriebenen Entstickungsmechanismus im stromabwärts angeordneten Konverter.

Die Erfindung betrifft weiterhin ein Verfahren zur Herstellung eines ULC-Stahls, insbesondere eines IF-Stahls, bevorzugt eines nicht kornorientierten Elektrobandes, umfassend die folgenden Schritte:
- Herstellung von stickstoffarmen Rohstahl gemäß dem zuvor beschriebenen Verfahren
- Sekundärmetallurgische Behandlung des hergestellten Rohstahls
- Vergießen des Rohstahls in einer Stranggussanlage

Das Verfahren hat dabei die gleichen Vorteile wie das zuvor erläuterte Verfahren zur Herstellung von stickstoffarmen Rohstahls.

Die sekundärmetallurgische Behandlung des hergestellten Rohstahls umfasst dabei insbesondere eine Vakuumbehandlung.

Bei der Vakuumbehandlung wird der Kohlenstoffgehalt [C] des hergestellten Rohstahls von maximal 600 ppm auf den gewünschten Maximalgehalt der ULC-Stahlgüte von maximal 150 ppm, bevorzugt maximal 100ppm, bevorzugt maximal 50 ppm, insbesondere maximal 30 ppm abgesenkt. Die Vakuumbehandlung erfolgt insbesondere mit Hilfe des Ruhrstahl-Heraeus-Verfahren. Alternativ kann die Vakuumbehandlung mit Hilfe der Pfannenstandsentgasung erfolgen.

Die Erfindung betrifft weiterhin ein Aggregat zur Durchführung des zuvor beschriebenen Verfahrens. Dabei umfasst das Aggregat einen Schmelzofen mit Lichtbogen-Widerstandserwärmung zur Erzeugung einer metallischen Schmelze mit einem stromabwärts, bevorzugt unmittelbar stromabwärts, angeordneten Konverter zum Frischen der metallischen Schmelze zu flüssigem Rohstahl.

Dabei hat das Aggregat die Vorteile, die zuvor in Bezug auf das Verfahren erläutert wurden.

In einer bevorzugten Ausführungsvariante umfasst das Aggregat eine Direktreduktionsanlage stromaufwärts, bevorzugt unmittelbar stromaufwärts, des Schmelzofens mit Lichtbogen-Widerstandserwärmung und/oder eine sekundärmetallurgische Anlage stromabwärts, bevorzugt unmittelbar stromabwärts des Konverter. Die direkte Anbindung der Direktreduktionsanlage an den Schmelzofen hat den Vorteil, dass das erzeugte direktreduzierte Eisen noch heiß in den Schmelzofen chargiert werden kann. Dies reduziert den Energieeinsatz beim Aufschmelzen. Ebenso ist die direkte Anbindung der sekundärmetallurgischen Anlage an den Konverter vorteilhaft, da so der flüssige Rohstahl unmittelbar der Weiterverarbeitung zugeführt werden kann.

Die Erfindung betrifft ebenfalls ein Aggregat zur Durchführung des zuvor beschriebenen Verfahrens zur Herstellung eines ULC-Stahls. Dabei umfasst das Aggregat einen Schmelzofen mit Lichtbogen-Widerstandserwärmung zur Erzeugung einer metallischen Schmelze mit einem stromabwärts angeordneten Konverter zum Frischen der metallischen Schmelze zu flüssigem Rohstahl, eine sekundärmetallurgische Anlage stromabwärts des Konverter und eine Stranggussanlage stromabwärts der sekundärmetallurgische Anlage. Die sekundärmetallurgische Anlage ist insbesondere als eine Vakuumentgasungsanlage, bevorzugt eine RH-Anlage, ausgeführt.

Die Erfindung betrifft weiterhin ein Verfahren zur Umrüstung eines bestehenden Aggregats zur Erzeugung stickstoffarmen Rohstahls mit einem Hochofen und einem, stromabwärts des Hochofens angeordneten, bestehenden Konverter durch Hinzufügen eines Schmelzofens mit Lichtbogen-Widerstandserwärmung stromaufwärts, bevorzugt unmittelbar stromaufwärts, des bestehenden Konverters und Außerbetriebnahme des bestehenden Hochofens. Überraschend hat sich gezeigt, dass ein stickstoffarmer Rohstahl mit einem deutlich reduzierten CO₂-Ausstoss erzeugt werden kann, indem anstelle eines bestehenden Hochofens ein Schmelzofen mit Lichtbogen-Widerstandserwärmung stromaufwärts des bestehenden Konverters verwendet wird. Bislang wurden derartige Schmelzöfen nicht mit einem separaten Konverter gekoppelt, um bestimmte Stahlgüten herzustellen. Separate Konverter sind bislang nur in Kombination mit Hochöfen bekannt. Erfindungsgemäß wurde erkannt, dass der Hochofen durch einen beschriebenen einfachen Schmelzofen mit Lichtbogen-Widerstandserwärmung ersetzt werden kann. Bei dieser Kombination ergeben sich die mit Bezug auf das Verfahren erläuterten synergetische Effekte. Insbesondere ist dies der besonders niedrige Stickstoffgehalt des erzeugten Rohstahls. Zudem ist diese Umrüstung vergleichsweise kostengünstig zu realisieren, da der bestehende Konverter weiterverwendet werden kann. Ebenso können aufgrund des niedrigen Stickstoffgehaltes die weiteren stromabwärts angeordneten sekundärmetallurgischen Anlagen in identischer Weise weiterverwendet werden. Dies hat den Vorteil, dass keine Neuzertifizierung des Herstellungsprozesses einer Stahlgüte für den Endkunden erforderlich wird. Da die Zertifizierung des Herstellungsprozesses nur die Verfahrensschritte in Anschluss an den Konverter betrifft, kann eine Neuzertifizierung vermieden werden, wenn diese Schritte unverändert bleiben. Die erfindungsgemäße Umrüstung erlaubt, genau diese Schritte unverändert vom Hochofen-Prozess zu übernehmen.

Die Erfindung betrifft weiterhin ein Verfahren zur Umrüstung eines bestehenden Aggregats zur Erzeugung von ULC-Stahlgüten mit einem Hochofen, einem, stromabwärts des Hochofens angeordneten, bestehenden Konverter und einer stromabwärts des Konverters angeordneten sekundärmetallurgischen Anlage. Das Verfahren umfasst das Hinzufügen eines Schmelzofens mit Lichtbogen-Widerstandserwärmung stromaufwärts, bevorzugt unmittelbar stromaufwärts, des bestehenden Konverters und die Außerbetriebnahme des bestehenden Hochofens. Dabei hat das Verfahren zur Umrüstung eines bestehenden Aggregats zur Erzeugung von ULC-Stahlgüten die gleichen Vorteile wie das zuvor erläuterte Verfahren zur Umrüstung eines bestehenden Aggregats zur Erzeugung stickstoffarmen Rohstahls, da der stickstoffarme Rohstahl als Ausgangsmaterial für die Erzeugung der ULC-Stahlgüten verwendet wird.

In einer bevorzugten Variante umfassen die beiden vorgenannten Umrüstverfahren das Hinzufügen einer Direktreduktionsanlage stromaufwärts, bevorzugt unmittelbar stromaufwärts, des Schmelzofens mit Lichtbogen-Widerstandserwärmung. Die direkte Anbindung der Direktreduktionsanlage an den Schmelzofen hat den Vorteil, dass das erzeugte direktreduzierte Eisen noch heiß in den Schmelzofen chargiert werden kann. Dies reduziert den Energieeinsatz beim Aufschmelzen.

Näher erläutert wird die Erfindung anhand der Figuren. Dabei zeigen
- Figur 1: ein Flussdiagramm des erfindungsgemäßen Verfahrens zur Herstellung von Rohstahl
- Figur 2: eine schematische Darstellung eines Schmelzofens mit Lichtbogen-Widerstandser-wärmung
- Figur 3: eine schematische Darstellung eines Konverters
- Figur 4: eine schematische Darstellung einer Direktreduktionsanlage

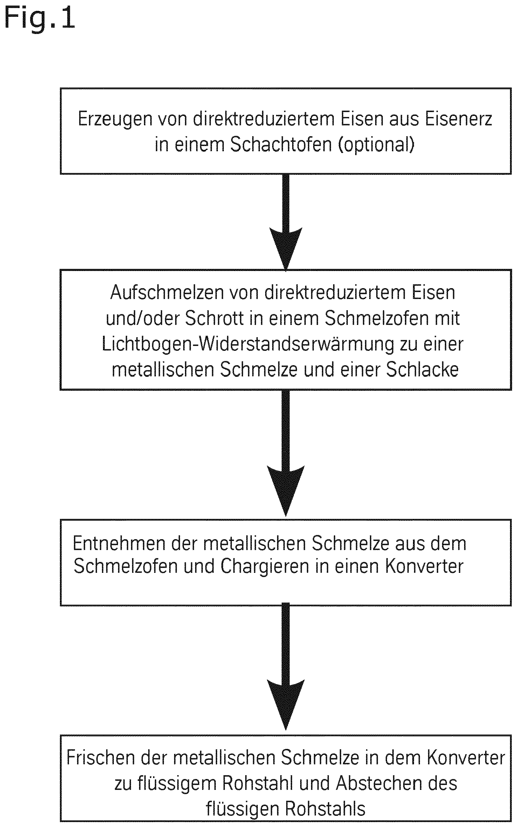

Figur 1 zeigt ein Flussdiagramm des erfindungsgemäßen Verfahrens zur Herstellung von stickstoffarmen Rohstahl. In einem ersten optionalen Schritt wird direktreduziertes Eisen aus Eisenerz in einem Schachtofen erzeugt. Alternativ kann das direktreduzierte Eisen auch zugekauft werden. In einem anschließenden Schritt wird das direktreduzierte Eisen in einem Schmelzofen mit Lichtbogen-Widerstandserwärmung verbracht. Zusätzlich kann gegebenenfalls auch Schrott mit in den Schmelzofen verbracht werden. Im Schmelzofen werden Eisen und/oder Schrott zu einer metallischen Schmelze und einer Schlacke aufgeschmolzen. Anschließend wird die metallische Schmelze dem Schmelzofen entnommen und in einen Konverter chargiert. Im Konverter wird die metallische Schmelze zu flüssigem Rohstahl gefrischt. Der flüssige Rohstahl wird anschließend im Konverter abgestochen.

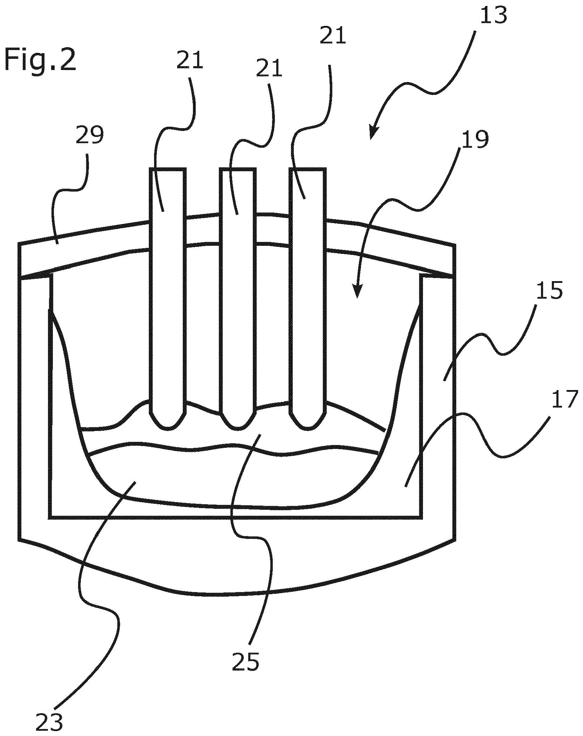

Figur 2 zeigt einen Schmelzofen mit Lichtbogen-Widerstandserwärmung 13 in Form eines Lichtbogen-Reduktionsöfen (engl. Submerged Electric Arc Furnace SAF). Der Schmelzofen 13 umfasst ein Ofengefäß 15, das innenseitig mit Feuerfestmaterial 17 ausgemauert ist. In den Innenraum 19 ragen drei Elektroden 21, die mit Wechselstrom betrieben werden. Im Innenraum 19 befindet sich bereits die metallische Schmelze 23. Auf der metallischen Schmelze 23 hat sich eine Schicht aus Schlacke 25 abgesetzt. In die Schlacke 25 ragen drei Elektroden 21 hinein. Zwischen den Elektroden 21 bildet sich also ein Strom aus, der über die Schlackeschicht 25 verläuft und die Schlackeschicht 25 durch Widerstandserwärmung erhitzt. Diese Erwärmung wird von der Schlackeschicht 25 auf die metallische Schmelze 23 übertragen. Nach oben ist der Innenraum 19 durch einen Deckel 29 abgeschlossen, durch den die drei Elektroden 21 hindurchragen. Die Elektroden 21 sind als sogenannte Söderberg-Elektroden ausgeführt.

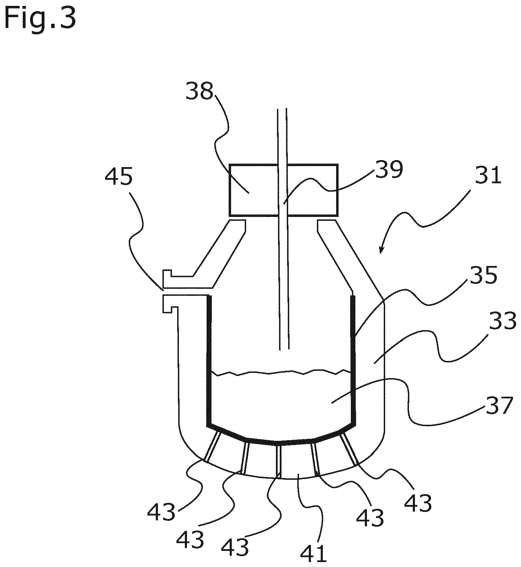

Figur 3 zeigt einen Konverter 31. Der Konverter 31 umfasst ein Konvertergefäß 33 mit einer feuerfesten Auskleidung 35. Im Konvertergefäß 33 befindet sich eine metallische Schmelze 37. Von oben ragt eine Lanze 39 in das Konvertergefäß 33, mit der Sauerstoff auf die Oberfläche der metallischen Schmelze 37 geblasen werden kann. Nach oben ist der Konverter 41 durch einen Deckel 38 geschlossen, durch den die Lanze 39 geführt ist. Der Konverterboden 41 weist Düsen 43 auf, durch die in Inertgas in den Konverter 31 ein geblasen werden kann. Der Konverter 41 weist seitlich eine Abstichöffnung 45 auf, durch die der flüssige Rohstahl nach dem Frischen durch Kippen des Konvertergefäßes 33 entnommen werden kann.

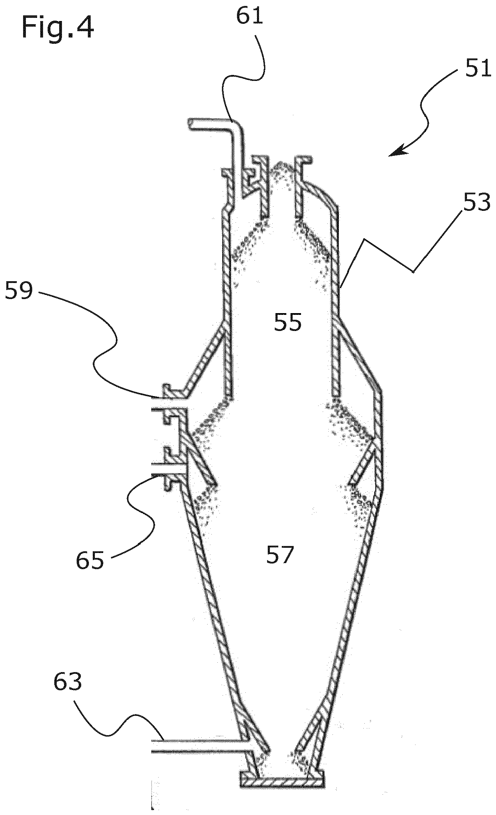

Figur 4 zeigt er schematische Darstellung einer Direktreduktionsanlage 51. Die Direktreduktionsanlage 51 umfasst den Schachtofen 53. Im Schachtofen 53 ist eine Reduktionszone 55 und eine Kühlzone 57 angeordnet. Die Reduktionszone 55 bis dabei oberhalb der Kühlzone 57 angeordnet. Von oben wird der Schachtofen 53 mit Eisenerz befüllt. Am unteren Ende des Schachtofen 53 kann das erzeugte direktreduzierte Eisen entnommen werden. Gleichzeitig wird durch den Einlass 59 Reduktionsgas in den Schachtofen 53 eingelassen. Das Reduktionsgas durchströmt daraufhin das Eisenerz in der Reduktionszone 55. Unverbrauchtes Reduktionsgas tritt zusammen mit etwaigen gasförmigen Reaktionsprodukten am Auslass 61 wieder aus. Das Reduktionsgas durchströmt die Reduktionszone 55 somit entgegen einer Bewegungsrichtung des Eisenerzes. Nach dem Verlassen der Reduktionszone 55 tritt das direktreduzierte Eisen in die Kühlzone 57 ein. In der Kühlzone 57 wird der Eisenschwamm im Kühlgas entgegen der Bewegungsrichtung des Eisens durchströmt. Das Kühlgas tritt hierzu durch den Einlass 63 in den Schachtofen 53 ein. Unverbrauchtes Kühlgas tritt zusammen mit etwaigen gasförmigen Reaktionsprodukten am Auslass 65 wieder aus. Selbstverständlich kann auch ein gewisser Anteil des Kühlgases in die Reduktionszone 55 eintreten. Ebenso kann ein gewisser Anteil des Reduktionsgases in die Kühlzone 57 eintreten. Das Kühlgas ist bevorzugt kohlenstoffhaltig, um eine Aufkohlung des erzeugten direktreduzierten Eisens zu bewirken.

## Patentansprüche

1. Verfahren zur Herstellung von stickstoffarmen Rohstahl umfassend die folgenden Verfahrensschritte:
- Aufschmelzen von direktreduziertem Eisen und/oder Schrott in einem Schmelzofen mit Lichtbogen-Widerstandserwärmung zu einer metallischen Schmelze und einer Schlacke
- Entnehmen der metallischen Schmelze aus dem Schmelzofen und Chargieren in einen Konverter
- Frischen der metallischen Schmelze in dem Konverter zu flüssigem Rohstahl und Abstechen des flüssigen Rohstahls mit einem Stickstoffgehalt [N] von maximal 50ppm, insbesondere von maximal 30 ppm

2. Verfahren nach Anspruch 1, **dadurch gekennzeichnet, dass** der Kohlenstoffgehalt [C] der metallische Schmelze im Schmelzofen und/oder im Konverter erhöht wird.

3. Verfahren nach einem der Ansprüche 1 bis 2, **dadurch gekennzeichnet, dass** die metallische Schmelze unmittelbar vor dem Frischen ein Verhältnis von Kohlenstoffgehalt zu Stickstoffgehalt [C]/[N] aufweist, das mindestens 20, insbesondere mindestens 100 beträgt.

4. Verfahren nach einem der Ansprüche 1 bis 3, **dadurch gekennzeichnet, dass** der Eisenanteil (Fe) der Schlacke im Schmelzofen kleiner ist als 30 Gew.-%.

5. Verfahren nach einem der Ansprüche 1 bis 4, **dadurch gekennzeichnet, dass** die metallische Schmelze unmittelbar vor dem Frischen die folgenden Gehalten von Begleitelementen aufweist:
Kohlenstoff [C]: mindestens 1,0%, maximal 5,0%
Stickstoff [N]: maximal 450ppm
Optional Sauerstoff [O]: 0-50 ppm
Optional Phosphor [P]: 100- 1500 ppm
Optional Schwefel [S]: 0-1500 ppm
Optional Silizium [Si]: 0-1,5%
Optional Mangan [Mn]: 0-0,5%

6. Verfahren nach einem der Ansprüche 1 bis 5, **dadurch gekennzeichnet, dass** der abgestochene flüssige Rohstahl die folgenden Gehalten von Begleitelementen aufweist:
Kohlenstoff [C]: maximal 600 ppm
Stickstoff [N]: maximal 50 ppm, insbesondere maximal 30 ppm
Sauerstoff [O]: mindestens 300 ppm, maximal 2300 ppm
Optional Phosphor [P]: 0-400ppm
Optional Schwefel [S]: 0-1500ppm
Optional Silizium [Si]: 0-300ppm
Optional Mangan [Mn]:0-0,4%

7. Verfahren nach einem der Ansprüche 1 bis 6, **dadurch gekennzeichnet, dass** beim Frischen mit einer ausfahrbaren wassergekühlten Lanze Sauerstoff auf die metallische Schmelze geblasen wird, wobei die Blaszeit insbesondere mindestens 10 Minuten beträgt und wobei optional ein Inertgas über Düsen im Konverterboden eingeblasen wird.

8. Verfahren nach einem der Ansprüche 1 bis 7 umfassend den vorgeschalteten folgenden Schritt:
- Erzeugen von direktreduziertem Eisen aus Eisenerz in einem Schachtofen, insbesondere unter Verbrauch von elektrolytisch erzeugtem Wasserstoff oder unter Verbrauch von Erdgas oder unter Verbrauch von Koksofengas

9. Verfahren zur Herstellung eines ULC-Stahls, insbesondere eines IF-Stahls, bevorzugt eines nicht kornorientierten Elektrobandes, umfassend die folgenden Schritte:
- Herstellung von stickstoffarmen Rohstahl gemäß dem Verfahren nach einem der Ansprüche 1 bis 8
- Sekundärmetallurgische Behandlung des hergestellten Rohstahls, insbesondere Vakuumbehandlung des hergestellten Rohstahls
- Vergießen des Rohstahls in einer Stranggussanlage

10. Aggregat zur Durchführung des Verfahrens nach einem der Ansprüche 1 bis 8, umfassend einen Schmelzofen mit Lichtbogen-Widerstandserwärmung zur Erzeugung einer metallischen Schmelze mit einem stromabwärts angeordneten Konverter zum Frischen der metallischen Schmelze zu flüssigem Rohstahl.

11. Aggregat nach Anspruch 10 umfassend eine Direktreduktionsanlage stromaufwärts des Schmelzofen mit Lichtbogen-Widerstandserwärmung und/oder eine sekundärmetallurgische Anlage stromabwärts des Konverter.

12. Aggregat zur Durchführung des Verfahrens nach Anspruch 9, umfassend einen Schmelzofen mit Lichtbogen-Widerstandserwärmung zur Erzeugung einer metallischen Schmelze mit einem stromabwärts angeordneten Konverter zum Frischen der metallischen Schmelze zu flüssigem Rohstahl, einer sekundärmetallurgische Anlage stromabwärts des Konverter und einer Stranggussanlage stromabwärts der sekundärmetallurgische Anlage.

13. Verfahren zur Umrüstung eines bestehenden Aggregats zur Erzeugung stickstoffarmen Rohstahls mit einem Hochofen und ein einem, stromabwärts des Hochofens angeordneten, bestehenden Konverter durch Hinzufügen eines Schmelzofen mit Lichtbogen-Widerstandserwärmung stromaufwärts des bestehenden Konverter und Außerbetriebnahme des bestehenden Hochofens.

14. Verfahren zur Umrüstung eines bestehenden Aggregats zur Erzeugung von ULC-Stahlgüten mit einem Hochofen, einem, stromabwärts des Hochofens angeordneten, bestehenden Konverter und einer stromabwärts des Konverters angeordneten sekundärmetallurgischen Anlage durch Hinzufügen eines Schmelzofen mit Lichtbogen-Widerstandserwärmung stromaufwärts des bestehenden Konverter und Außerbetriebnahme des bestehenden Hochofens.

15. Verfahren nach einem der Ansprüche 13 bis 14 umfassend das Hinzufügen einer Direktreduktionsanlage stromaufwärts des Schmelzofens mit Lichtbogen-Widerstandserwärmung.
